# EUROPEAN PATENT SPECIFICATION

(11) **EP 1 541 456 B1**
(45) Date of publication and mention of the grant of the patent: **01.08.2007**
(21) Application number: 03740490.2
(22) Date of filing: 03.07.2003
(51) Int. Cl.: B62J 6/20, B62J 23/00, B62J 27/00

(54) **ADJUSTABLE SAFETY DISTANCE SPACER FOR BICYCLES**
VERSTELLBARE SICHERHEITSABSTANDSVORRICHTUNG FÜR FAHRRÄDER
ECARTEUR DE DANGER REGLABLE POUR BICYCLETTES

(30) Priority: 09.07.2002 ES 200201676
(43) Date of publication of application: 15.06.2005
(73) Proprietor: Benitez Manzano, Diego, 35412 Arucas (ES)
(72) Inventor: Benitez Manzano, Diego, 35412 Arucas (ES)
(74) Representative: Duran Benejam, Maria del Carmen
(86) International application number: PCT/ES2003/000332
(87) International publication number: WO 2004/005121

(56) References cited:
- DE-U1- 29 609 065
- ES-U- 1 027 262
- US-A- 2 586 643
- US-A- 3 945 336
- US-A- 3 967 575
- US-A- 4 038 935
- US-A- 4 342 280
- US-A- 4 586 454
- US-A- 4 747 664

## Description

### OBJECT OF INVENTION

The present invention is referred to one adjustable safety distance spacer for bicycles, which is fastened by supports to the bicycle frame. It allows the cyclist to signpost with any of the two hands, in a fast, comfortable and safe way, the situation of the minimal distance of security when being overtaken by another vehicle. This distance depends on the characteristics of the road surface, thus it guarantees not to be collided by incompetence or carelessness of the drivers when they overtake, establishing a strip of security between the lateral border of the cyclist and the one of the vehicle that overtakes.

### BACKGROUND OF INVENTION

The distance spacers that we have known until now are fix, are not able to include all of the minimal distances shown in the present-day Traffic Law, which is a lateral distance of 1.5 meters, and are not adjustable when we want to change the security distance to be signposted. So their use present a great inconvenience because they cannot be continuously adapted to the changes of traffic and road surfaces, with the resulting risk to cause impact against another vehicle, pedestrian or static objects, risking the stability of the bicycle and the cyclist's security.

For example, it is known the distance spacer described in the Utility Model ES 1.027.262 for "Presence detector for two-wheeled vehicles". Said adjustable safety distance spacer according to the preamble of claim 1, which is formed by a directional and extendable rod, showing in one extreme and on a projecting view a presence indicator, such as a danger signpost triangle in red with a catadyoptric reflector. This sign is in an optimum position for its visualization and identification by the driver of any vehicle who wants to overtake the carrier of the indicator. The other side of the rod is resting and joined to a bracket, which allows it to be clamped to the bicycle frame or similar. In order to prevent accidents caused by tears or similar situations, the rod may have security devices such as magnetic hookups or others. Nevertheless, the handling of this detector is complicated because it moves back or forward, but the length is not adjustable and so the driver must stop to effect the movement. Moreover, in case of hooking or contact it may take to pieces, and so the user will have to stop in order to mount it over.

Those functional and utilization deficiencies don't exist in the present invention, which is effectively used to safeguard the security of the cyclist who is overtaken by another vehicle. This gadget allows the security distance to be adjusted manually, from 0 meters to 1.5 meters, its movable elements reflect the light and allow to detect the presence of the cyclist on the road, even during the night, increasing the security.

### DESCRIPTION OF THE INVENTION

The adjustable safety distance spacer for bicycles is an accessory to install in any kind of bicycles, since it can be adapted to the different frames. Its placing does not get in the way to manoeuvrability and therefore in the security when using the bike. It can also be used in wheelchairs.

The adjustable safety distance spacer is formed by two guide tubes, which are joined to the bicycle frame by two supports. These supports are adapted to all the frames found in the market. A thin spacer rod is placed inside the guide tubes. Its flexibility makes possible to adapt it to the forms of the tubes. This stick goes through the perforated plugs, which are placed at the every end of the guide tubes.

In one of the ends of the thin spacer rod a reflecting rotor is situated. This is formed by four curved blades, which ease that the rotor spins on its own axle when the air drafts get in. This reflecting rotor allows to reflect the light received by other vehicles and this helps to signpost the distance of security during the night.

Around the reflecting rotor there is an antihooking rotor protector, in a circumference form, which avoids the rotor to get hooked with those possible objects that accidentally may be touched on the way, such as, branches, posts or even vehicles.

The aforementioned protector is fastened to the spacer rod by means of a safety element in the shape of a hairpin.

When the thin spacer rod comes out of the guide tube, at the end, where is situated the reflecting rotor with its protector, this one, by the form that the guide tube has, it becomes situated in a perpendicular plane to the plane that contains the bicycle. The spacer rod can also be used as a support for other elements such as sidelights. At the end of the thin spacer rod there is a little sphere which makes easy the advance of the extreme of this stick in the inside of the guide tube.

### SHORT DESCRIPTION OF THE DRAWINGS

For a better understanding of the all described elements in the present memory, some drawings are included. It represents a practical case of realization of the adjustable safety distance spacer for bicycles.

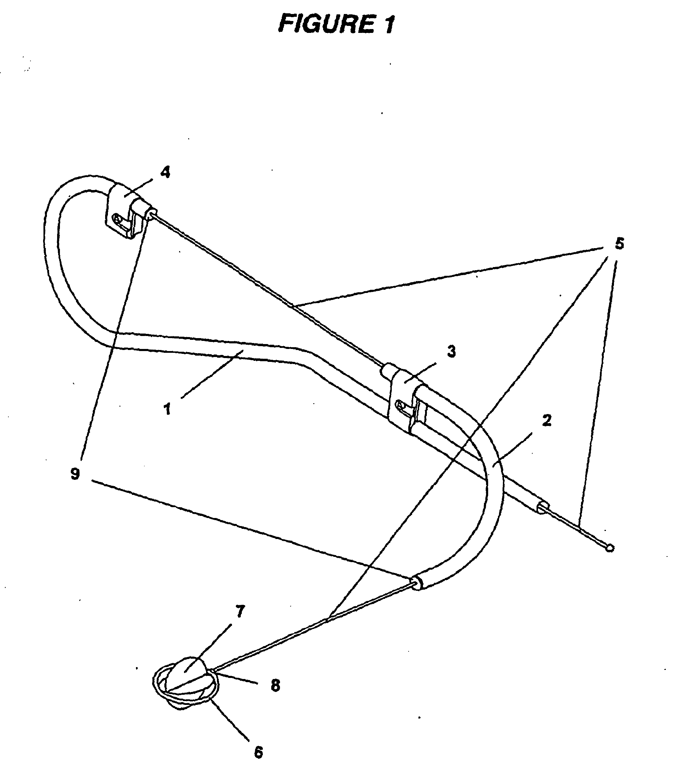

In these drawings, the figure 1 is a general perspective of an assembled group, where the guide tube - 1 - and the guide tube - 2 - are fastened to the bicycle frame by means of the double support - 3 - and of the simple support - 4 -. Inside the guide tube - 1 - and the guide tube - 2 -, pass the thin spacer rod -5- crossing the perforated plugs - 9 -. The thin spacer rod -5- contains the rotor -7- in one of its extremes which is protected by the antihooking -6-, which is linked with the thin spacer rod by means of a safety element in the shape of a hairpin - 8 -.
Figure 2 shows the front view and the side view of the Guide Tube - 1 - of the figure 1
Figure 3 shows the front view and the plan view of the Guide Tube - 2 - of the figure 1.
Figure 4 shows the front view, the plan view, the sides views and rear view of the Double Support - 3 - of the figure 1, where -1- is the Body of the Support, -2- is The Distance Spacer, -3- is the Uncovered Washer, -4- is the Tightener, -5- is the Belt in charge of embracing the tube of the bicycle frame, -6- is the Screw and -7- is the Screw Nut.
Figure 5 shows the front view, the plan view, the sides views and rear view of the Support Simple -4-, of the figure 1, where -1- is the Body of the Support, -2- is the Distance Spacer, -3- is the Uncovered Washer, -4- is the Tightener, -5- is the Belt, -6- is the Screw and -7- is the Screw Nut.
Figure 6 shows the front view in cut and the sides views of the Body of the Support -1- of the figure 4.
Figure 7 shows the front view and the plan view of the Distance Spacer - 2 - of figures 4 and 5.
Figure 8 shows the front view and the side view of the Uncovered Washer - 3 - of figures 4 and 5.
Figure 9 shows the front view and the plan view of the Tightener - 4- of the figures 4 and 5.
Figure 10 shows the front view and the plan view of the Belt - 5- of figures 4 and 5.
Figure 11 shows the front view and the side view of the Screw - 6 - and of the Screw Nut - 7- of figures 4 and 5.
Figure 12 shows the front view in cut and the side views of the Body of Support - 1 - of figure 5.
Figure 13 shows the front view and the plan view of the Thin Spacer Rod - 5 - of figure 1.
Figure 14 shows the front view and the side views of the Antihooking Protector of the Rotor -6- of figure 1.
Figure 15 shows the front view and the side view of the Reflecting Rotor -7- of figure 1.
Figure 16 shows the front view and the side view of the Protector - 8- of figure 1.
Figure 17 shows the front view and the side view of the Perforated Plug -9- of figure 1.
Figure 18 is a general perspective of an assembled group, where the guide tube - 1 - and the guide tube - 2 - are fastened to the bicycle frame - 10 - by means of the double support - 3 - and of the simple support - 4 -. Inside the guide tube - 1 - and the guide tube - 2 - pass the thin spacer rod -5-crossing the perforated plugs - 9 -. This spacer rod -5- contains the rotor -7- in one of its extremes, which is protected by the antihooking -6-, which is connected with the thin spacer rod by means of a safety element in the shape of a hairpin - 8 -.

### DESCRIPTION OF PREFERRED REALIZATION

The adjustable safety distance spacer for bicycles (figure 1) is composed of the pieces-1-, -2-, -3-, -4-, -5-, -6-, -7-, -8- and -9-.

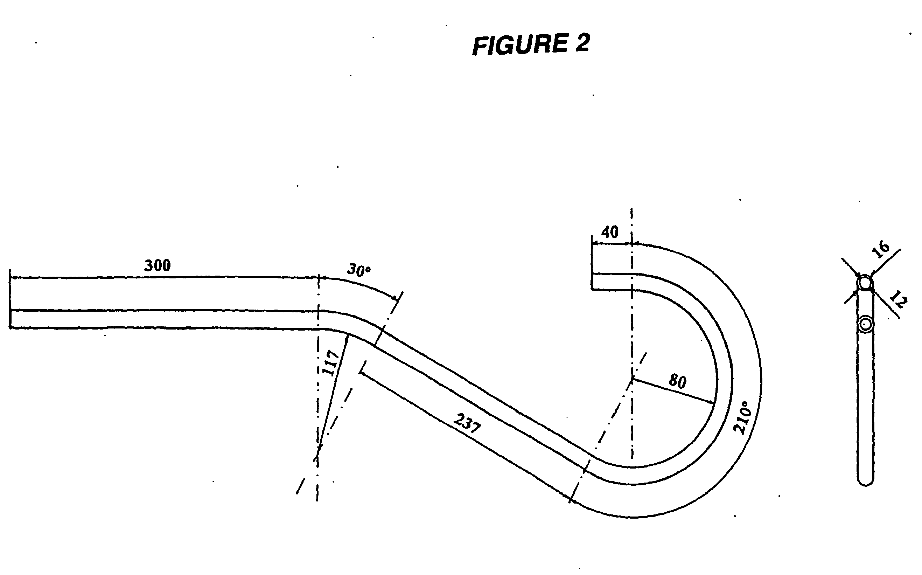

Piece - 1 - (figure 1) of plastic material, it is a tube and it fits up in forms as well as in dimensions to the explained elements in the figure 2.

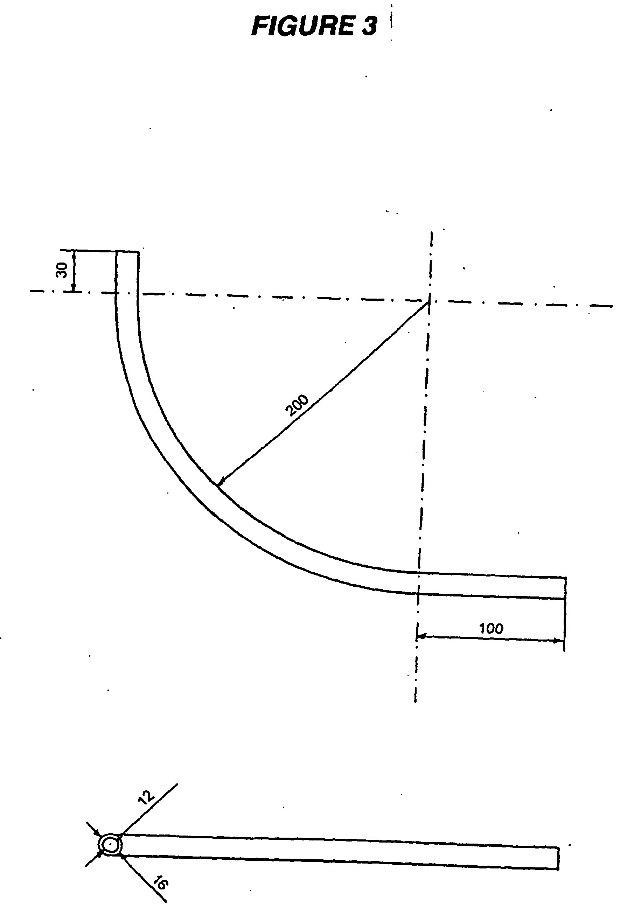

Piece - 2 - (figure 1) of plastic material, it is a tube and it fits up in forms as well as in dimensions to the explained elements in the figure 3.

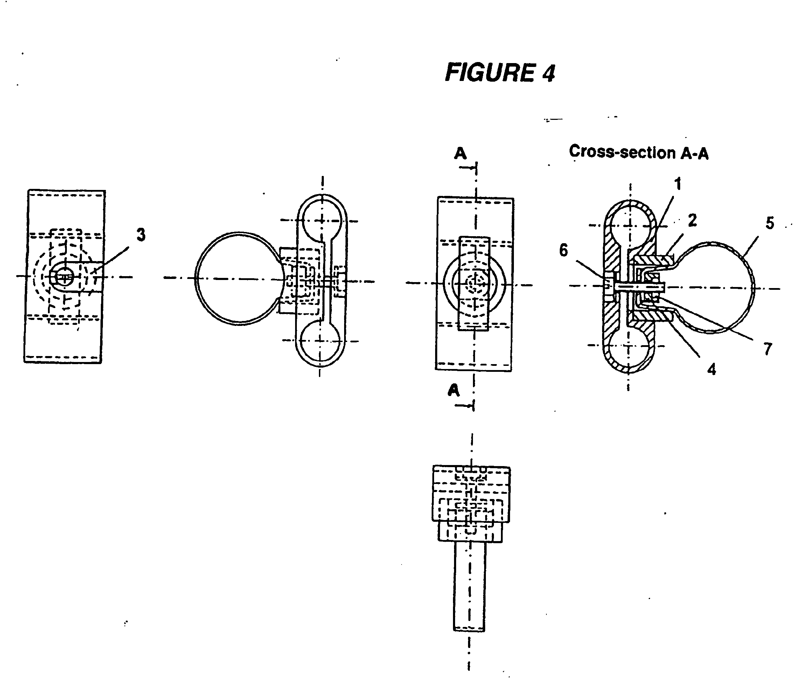

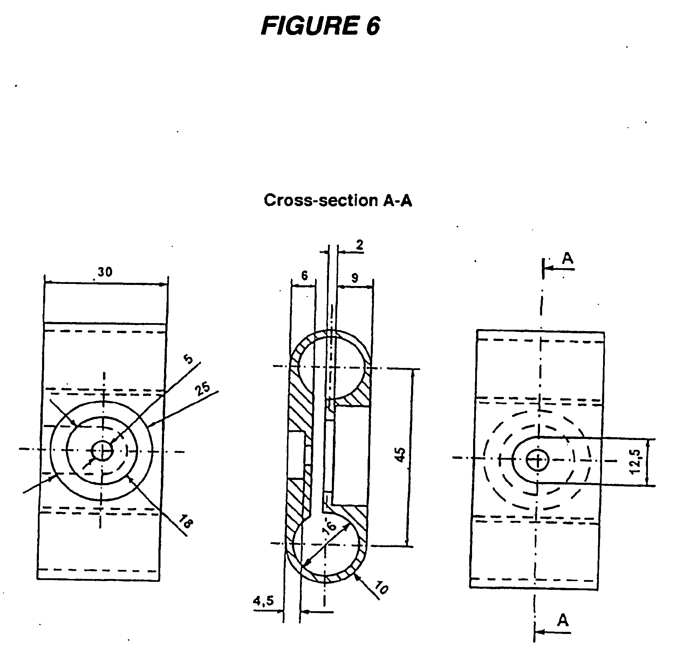

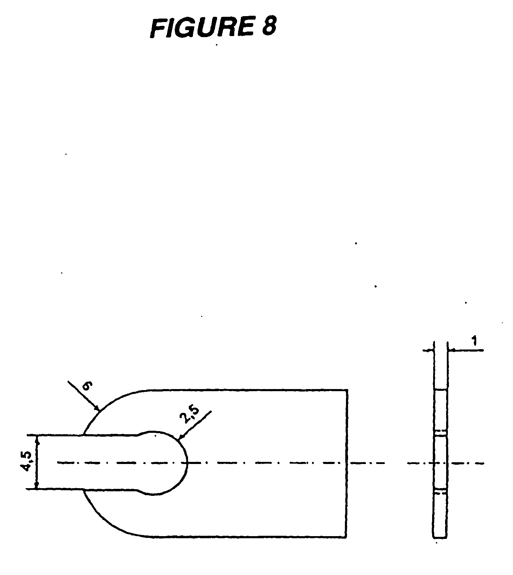

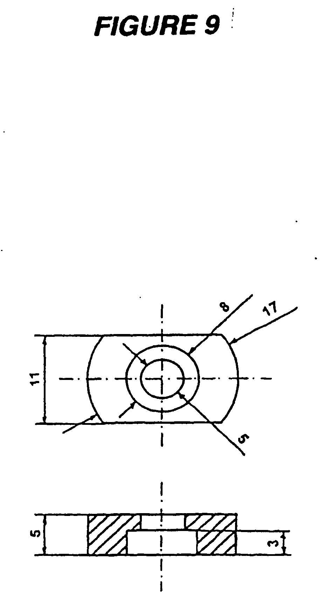

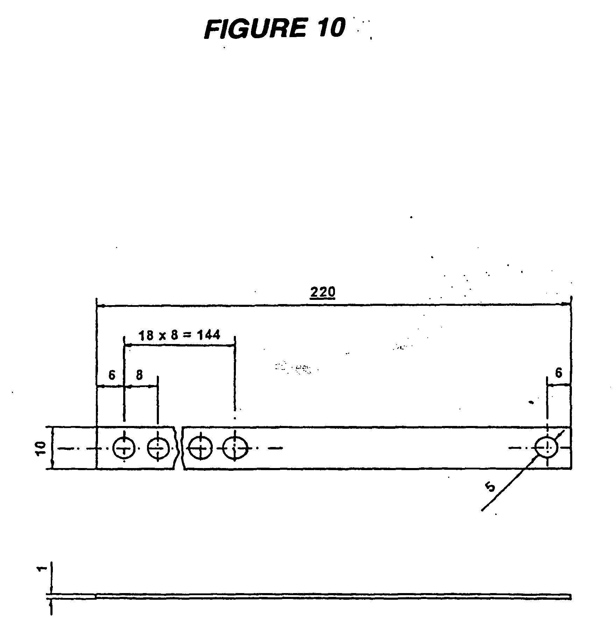

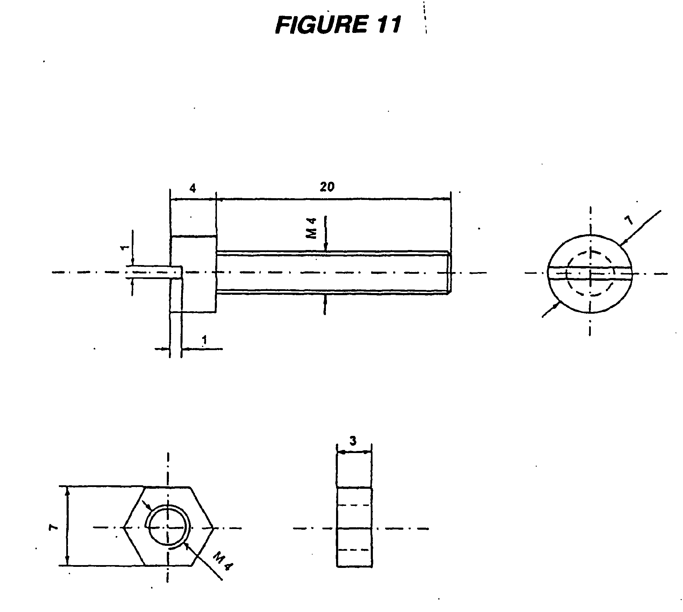

Piece - 3 - (figure 1) is a support for two tubes and it fits up so much in forms as in dimensions to the detailed in figures 4, 6, 7, 8, 9, 10 and 11. Figures 6, 7, 8, 9 and 10, are of plastic material, while the pieces of the figure 11 are made of steel or aluminium.

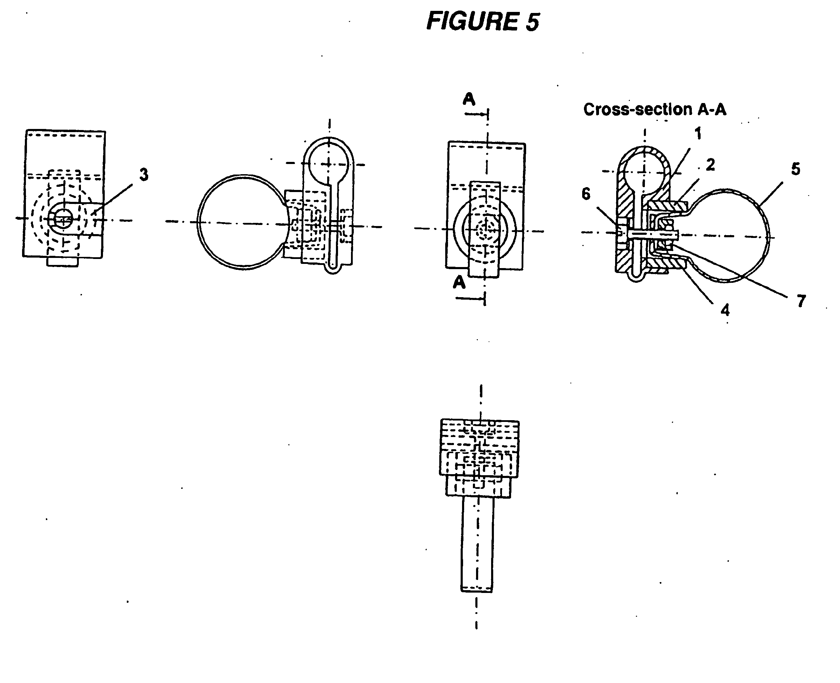

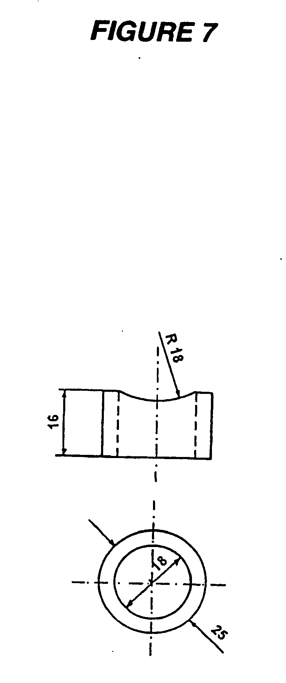

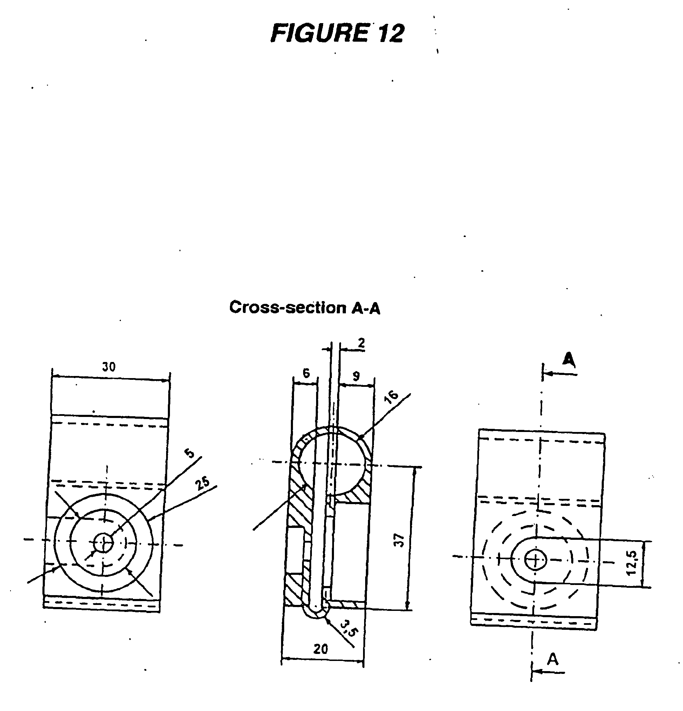

Piece - 4 - (figure 1) is a tube support and it fits up so much in forms as in dimensions to the detailed in figures 5, 7, 8, 9, 10, 11 and 12. Figures 7, 8, 9, 10 and 12, are of plastic material, while the pieces of figure 11 are made of steel or aluminium.

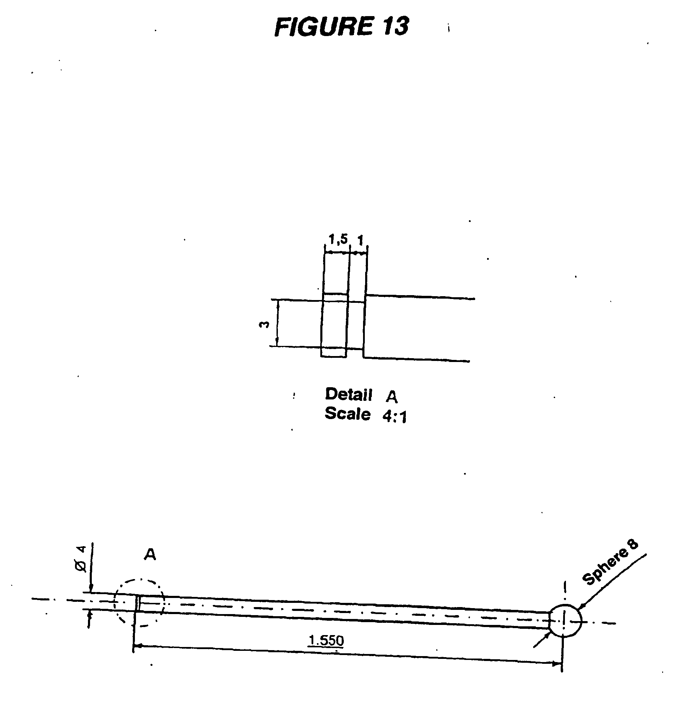

Piece - 5 - (figure 1) of carbon fibre , is a thin rod and it fits up so much in forms as in dimensions to the detailed in figure 13.

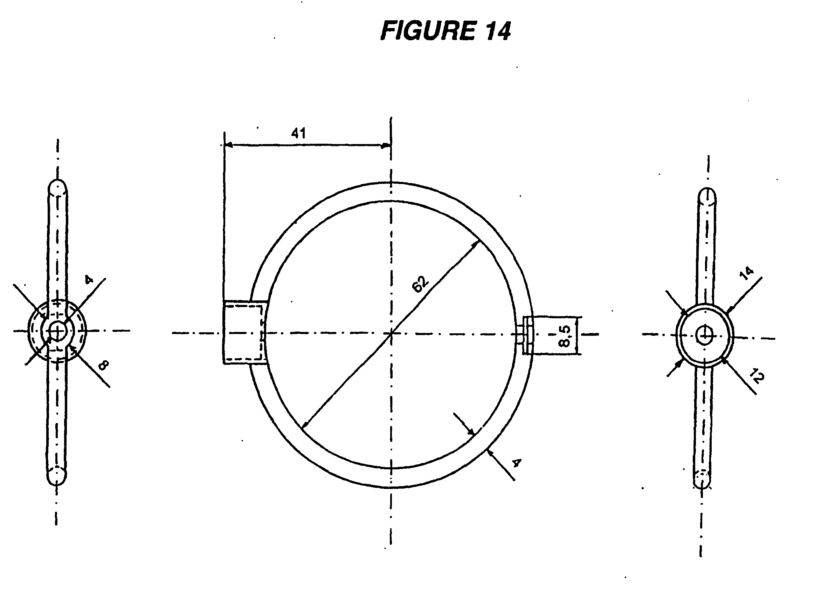

Piece - 6 - (figure 1) of plastic material, has got a hoop form and it fits up so much in forms as in dimensions to the detailed in figure 14.

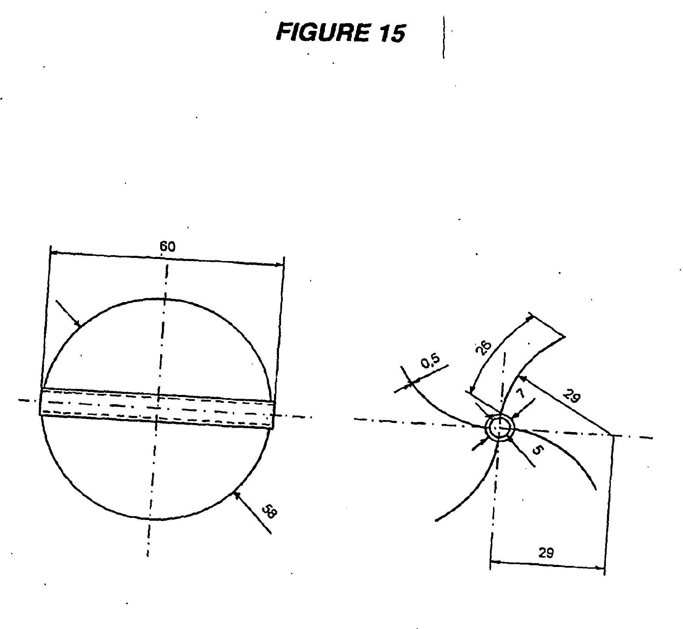

Piece - 7 - (figure 1) of plastic material, it is a rotor with four shovels, which is painted with a reflecting paint, and it fits up so much in forms as in dimensions to the detailed in figure 15.

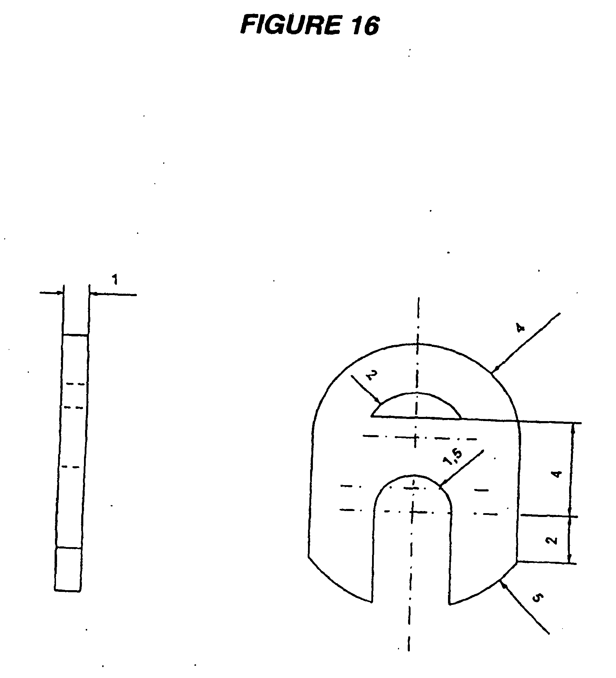

Piece - 8 - (figure 1) of plastic material, it is a safety element in the shape of a hairpin and it fits up so much in forms as in dimensions to the detailed in figure 16.

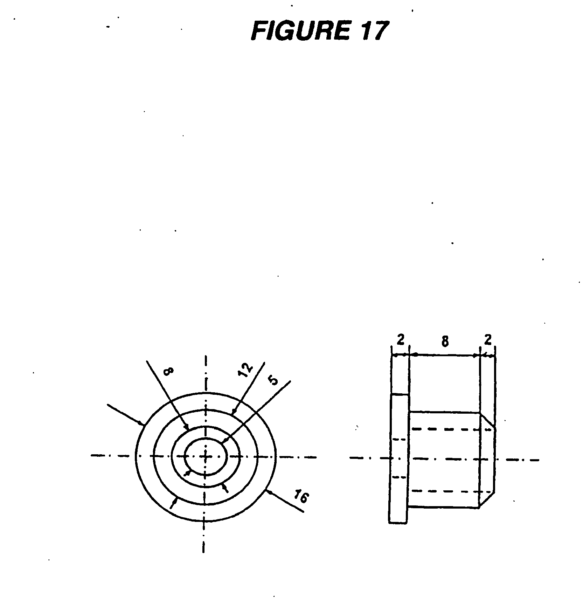

Piece - 9 - (figure 1) of plastic material, is a perforated cork and it fits up so much in forms as in dimensions to the detailed in figure 17.

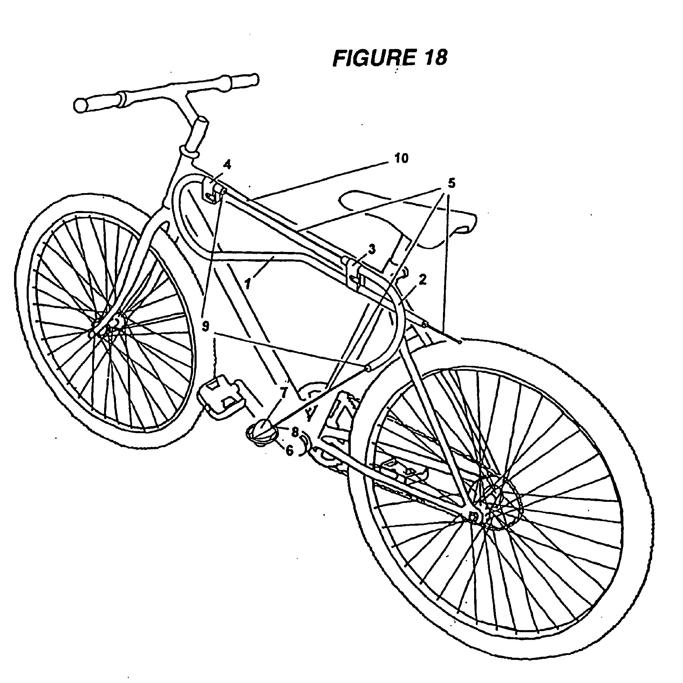

From the description and by the observation of the drawings, we can appreciate how innovative the adjustable safety distance spacer for bicycles is (figure 18), which is joined to the frame - 10 - of the bicycle by means of the supports - 3 - and - 4 -permitting the cyclist to fasten with a hand the thin spacer rod -5-, in the space comprised between supports -3- and -4-, moving it forwards or backwards, decreasing or increasing the distance of security of the cyclist , in a fast and effective form.

The materials used in the manufacture of the components of the adjustable safety distance spacer, the forms and the dimensions will be independent from the invention's object, as long as they do not affect its essence.

### INDUSTRIAL APPLICATION

The dimensions, forms and materials used in the adjustable safety distance spacer for bicycles, allow to be manufactured at the present time by any industry dedicated to the moulding and assembling of plastic pieces.

## Claims

1. Adjustable safety distance spacer for bicycles comprising a first (1) and a second (2) guide tube and two supports (3, 4) **characterized in that** the adjustable safety distance spacer further comprises a thin spacer rod (5), which is movable inside of the two guide tubes (1, 2), a light reflecting rotor (7) and a rotor protector (6), the rotor (7) and the rotor protector (6) being situated at an end of the thin spacer rod (5), and the two supports (3, 4) are suitable, respectively, for fixing the first (1) and the second (2) guide tubes to a bicycle frame.

2. Adjustable safety distance spacer for bicycles according to claim 1, further **characterized in that** when the supports (3, 4) of the adjustable safety distance spacer are mounted to a bicycle frame, the axis of the end of the thin spacer rod, which comes out of the second guide tube (2), is oriented perpendicularly to a plane through the longitudinal and vertical direction of the bicycle frame.

3. Adjustable safety distance spacer for bicycles according to claim 1, further **characterized in that** the rotor (7) has four curved coloured light reflecting blades, the protector (6) is of curved shape and the protector is fastened to the thin spacer rod (5) by a safety element in the shape of a hairpin (8).

## Patentansprüche

1. Verstellbares Sicherheitsabstandsstück für Fahrräder mit einem ersten (1) und zweiten (2) Führungsrohr sowie zwei Halterungen (3, 4) **dadurch gekennzeichnet, dass** das verstellbare Abstandsstück weiterhin eine dünne Abstandsstange (5), die innerhalb der zwei Führungsrohre (1, 2) verschiebbar ist, einen Licht reflektierenden Läufer (7) und einem Läuferschutz (6) aufweist, wobei der Läufer (7) und der Läuferschutz (6) am Ende der dünnen Abstandsstange (5) liegen und die zwei Halterungen (3, 4) zur Befestigung des ersten (1) bzw. zweiten (2) Führungsrohrs am Fahrradrahmen geeignet sind.

2. Verstellbares Sicherheitsabstandsstück für Fahrräder nach Anspruch 1, weiterhin **dadurch gekennzeichnet, dass** bei Befestigung der Halterungen (3, 4) des verstellbaren Sicherheitsabstandsstücks an einem Fahrradrahmen die Achse des aus dem zweiten Führungsrohr (2) kommenden Endes der dünnen Abstandsstange senkrecht zu einer Ebene durch die Längs- und Senkrechtrichtung des Fahrradrahmens orientiert ist.

3. Verstellbares Sicherheitsabstandsstück für Fahrräder nach Anspruch 1, weiterhin **dadurch gekennzeichnet, dass** der Läufer (7) vier gewölbte Licht reflektierende Lamellen aufweist, der Schutz (6) bogenförmig ist und der Schutz über ein Sicherheitselement in Form einer Haarnadel (8) an der dünnen Abstandsstange (5) befestigt ist.

## Revendications

1. La barre d'espacement de distance de sécurité réglable pour bicyclettes, comprenant un premier (1) et un second (2) tube-guide et deux supports (3,4) se **caractérise par le fait que** la barre d'espacement de distance de sécurité réglable comprend en outre une fine barre d'espacement mobile à l'intérieur des deux tubes-guide (1,2), un rotor à lumière réfléchissante (7) et un protecteur de rotor (6), le rotor (7) et le protecteur de rotor (6) étant placés à l'extrémité de la fine barre d'espacement (5) et que les deux supports (3,4) sont respectivement adaptés pour fixer le premier (1) et le second (2) tube-guide au cadre de la bicyclette.

2. La barre d'espacement de distance de sécurité réglable pour bicyclettes suivant la réclamation 1, se **caractérise en outre par le fait que** quand les supports (3,4) de la barre d'espacement de distance de sécurité réglable pour bicyclettes sont montés sur le cadre de la bicyclette, l'axe de l'extrémité de la fine barre d'espacement qui sort du second tube-guide (2) est perpendiculairement orienté vers un plan longitudinal et vertical du cadre de la bicyclette.

3. La barre d'espacement de distance de sécurité réglable pour bicyclettes suivant la réclamation 1, se **caractérise en outre par le fait que** le rotor (7) a quatre lames courbes colorées réfléchissant la lumière, que le protecteur (6) a une forme courbe et qu'il est attaché à la fine barre d'espacement (5) par un élément de sécurité ayant la forme d'une épingle à cheveux (8).
